# EUROPEAN PATENT SPECIFICATION

(11) **EP 1 887 824 B1**
(45) Date of publication and mention of the grant of the patent: **20.01.2010**
(21) Application number: 06742195.8
(22) Date of filing: 20.06.2006
(51) Int. Cl.: H04W 8/26, H04M 3/42

(54) **METHOD FOR REALIZING ONE CARD WITH MULTIPLE NUMBERS SERVICE**
VERFAHREN ZUR REALISIERUNG EINER KARTE MIT MEHREREN NUMMERNDIENSTEN
PROCEDE POUR REALISER UNE CARTE AVEC PLUSIEURS SERVICES DE NUMEROS

(30) Priority: 19.09.2005 CN 200510103507
(43) Date of publication of application: 13.02.2008
(73) Proprietor: Huawei Technologies Co., Ltd., Longgang District Shenzhen 518129 (CN)
(72) Inventor: YAO, Bingbing, Shenzhen, Guangdong 518129 (CN)
(74) Representative: Epping - Hermann - Fischer
(86) International application number: PCT/CN2006/001398
(87) International publication number: WO 2007/033546

(56) References cited:
- WO-A-98/53629
- CN-A- 1 320 346
- CN-A- 1 411 314
- CN-A- 1 476 272
- CN-A- 1 477 804
- CN-A- 1 518 383
- CN-A- 1 642 310

## Description

### Field of the Invention

The present invention relates to the intelligent network, and more particularly, to a method for implementing multi-numbers per sim card service.

### Background of the Invention

The term "multi-numbers per sim card" means multiple different numbers can be bound to the same one terminal and each number can provide consistent communication experience of subscribers,for example, dialing and answering calls, sending and receiving messages and so on. Subscribers can choose freely any one of the multiple numbers for communication. Developing the multi-numbers per sim card service aims to meet some subscribers' demand for owning multiple numbers without carrying multiple terminals.

In order to implement the multi-numbers per sim card service, the prior art involves modifying the existing terminals which apply one-card-per-terminal mode so that one terminal can correspond to multiple numbers, such as multi-cards per cellphone, multi-mode cellphone. The "multi-cards per cellphone" means that multiple cellphone cards can be installed into one cellphone, so that the subscriber can use multiple cellphone numbers for communication while carrying only one cellphone terminal. The "multi-mode cellphone" is a simple modification of the multi-cards per cellphone solution, in which one cellphone card installed in the cellphone terminal is compatible with multiple network modes, such as the existing GSM mode , CDMA mode, and even PHS mode.

However, both the "multi-cards per cellphone" technology and the "multi-mode cellphone" technology have the following problems.
- Only one of the multiple numbers which correspond to the same terminal can be online at any time, while other numbers are all in offline state, and therefore the subscriber can not be informed of the communication activities relating to the other numbers in real time.
- As for the inbound service, the technology in the prior art forwards incoming calls relating to other offline numbers to the currently online number in a forward manner. This technology can only solve problem concerning the voice call, but can not inform the subscriber of non-voice activities relating to the offline numbers. Meanwhile, forwarding the incoming calls also introduces a new problem, i.e. the subscriber can not determine for which one of the multiple numbers corresponding to the present terminal an incoming call relating to the online number is initiated.
- As for the outbound service, the subscriber can only use the online number which is currently activated for communication at any time, and if the subscriber wants to use an offline number for communication, he or she needs to switch (activate) the numbers manually.

Chinese Patent Application publication No. CN 1476272A discloses a distribution method of mobile subscriber numbers in the Global System for Mobile communications (GSM), where each mobile subscriber is assigned with an International Mobile Subscriber Identity (IMSI) and a corresponding group of Mobile Station Integrated Services Digital Number (MSISDN).

### Summary of the Invention

The present invention provides a method for implementing multi-numbers per sim card service to solve the problem existing in the prior art that the subscriber can only use the currently activated online number for communication at any time.

The present invention also provides another method for implementing multi-numbers per sim card service to solve the problem existing in the prior art that the subscriber can not be informed of the non-voice communication relating to the offline numbers and can not determine for which one of the multiple numbers corresponding to the present terminal the incoming call of the online number is initiated.

A method for implementing multi-numbers per sim card service of the present invention includes:
assigning, for each of the multiple numbers of a terminal, identification information uniquely corresponding to the each of the multiple numbers to form a one-to-one correspondence relationship between the each of the multiple numbers and the identification information, wherein the correspondence relationship is stored in a Service Control Point; carrying, in information of a service request, the identification information corresponding to the number that the calling subscriber intends to use when the terminal initiates the service request; obtaining, by the Service Control Point, the identification information according to the received service request, and retrieving, by the Service Control Point, the corresponding number with the identification information; and performing connection to the called side by using the corresponding number as the calling number.

According to an embodiment the identification information carried in the called number is removed firstly before the connection to the called side is performed. According to a further embodiment the calling number is changed from the number which initiates the service request to the corresponding number before the connection to the called side is performed.

According to a further embodiment the service request initiated by the terminal includes any one as selected from the group including: a request for a voice call, a request for sending a short message, a request for sending a value-added short message,a request for sending a multimedia message, and a request for sending an intra-net connection short message.

Another method of the present invention for achieving multi numbers per card service includes:
assigning, for each of the multiple numbers of a terminal, identification information uniquely corresponding to the each of the multiple numbers to form a one-to-one correspondence relationship between the each of the multiple numbers and the identification information, wherein the correspondence relationship is stored in a Service Control Point; retrieving, by the Service Control Point, a number currently activated by the terminal according to a called number and the correspondence relationship after receiving the service request; and performing, by the Service Control Point, connection to a called side by using the currently activated number as the called number.

According to a further embodiment corresponding identification information is retrieved according to the called number, and the corresponding identification information is added to the calling number, so as to display the calling number added with the identification information on the called terminal after the connection is established, thereby indicating the corresponding original called number corresponding to the present service request. According to a further embodiment the called number is changed from the number to which the calling side directs when initiating the service request to the number currently used by the called side, before the connection to the called side is performed.

According to a further embodiment the service request received by the terminal includes any one selected from the group comprising a voice call, a short message, a value-added short message, a multimedia message, and an intra-net connection short message.

The advantages of the present invention lie in that the system sets identification information uniquely corresponding to each of the multiple numbers bound to one terminal respectively, and stores the correspondence relationship between the identification and the numbers in the Service Control Point.

The identification information corresponding to the number that the subscriber intends to use is carried in the called number when the service side issues a service request. The calling number is changed from the number currently used by the calling subscriber to the number corresponding to the carried identification information after the called number has been analyzed by the Service Control Point. The number which the calling subscriber intends to use will be displayed on the called subscriber terminal after the connection is established. By doing this, the function of the multi-numbers per sim card of the prior art is reserved, while the function of initiating the service request by the currently offline number by using the identification information can be implemented.

When the service side receives a service request, the called number is analyzed by the Service Control Point and changed from the number to which the service request directs to the number currently used by the called subscriber, and meanwhile the identification information corresponding to the number to which the service request directs is added in the calling number.The calling number and the identification information corresponding to the number to which the service request directs are displayed on the called subscriber terminal after the connection is established. By using the identification information, one can know which one of the multiple numbers that are bound to the terminal the present service request directs to, and non-voice callings can also be reflected in time on the currently online number through the operation of changing the called number by the Service Control Point.

### Brief Description of Figures

Figure 1 is a flow chart showing the process in which a terminal initiates a service request according to the method of the present invention;
Figure 2 is a signaling flow chart showing the process of initiating voice call service to the opposite side according to the method of the present invention;
Figure 3 is a signaling flow chart showing the process of sending a short message to the opposite side according to the present invention;
Figure 4 is a signaling flow chart showing another process of sending a short message to the opposite side according to the present invention;
Figure 5 is a signaling flow chart showing the process of sending a value-added short message to the opposite side according to the present invention;
Figure 6 is a signaling flow chart showing another process of sending a value-added short message to the opposite side according to the present invention;
Figure 7 is a signaling flow chart showing the process of sending an intra-net connection short message to the opposite side according to the present invention;
Figure 8 is a signaling flow chart showing the process of sending a multimedia message to the opposite side according to the present invention;
Figure 9 is the process flow chart showing a process in which a terminal responds to a service request according to the method of the present invention;
Figure 10 is a signaling flow chart showing the process of responding to a voice call according to the present invention;
Figure 11 is a signaling flow chart showing another process of responding to a voice call according to the present invention;
Figure 12 is a signaling flow chart showing the process of receiving a short message according to the present invention;
Figure 13 is a signaling flow chart showing another process of receiving a short message according to the present invention;
Figure 14 is a signaling flow chart showing the process of receiving a value-added short message according to the present invention;
Figure 15 is a signaling flow chart showing the process of receiving an intra-net connection short message according to the present invention;
Figure 16 is a signaling flow chart showing the process of receiving a multimedia message according to the present invention.

### Detailed Description of the Embodiments

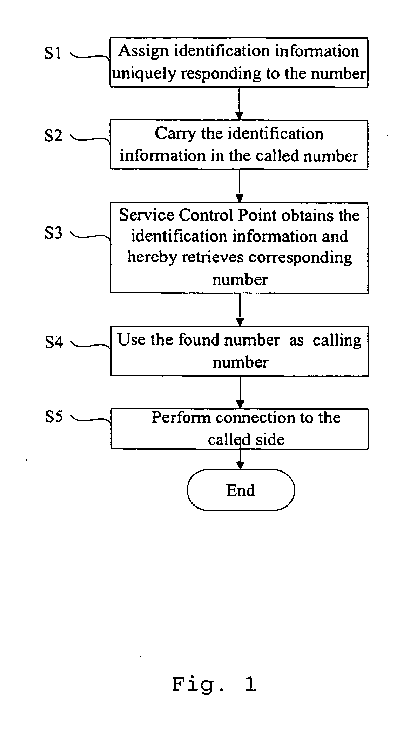

In order to enable the subscriber to perform communication by using the currently offline number without switching the currently activated online number, the present invention includes setting identification information uniquely corresponding to each of the multiple numbers bound to the terminal respectively, carrying the identification information corresponding to the number that the subscriber intends to use in the called number, and storing the one-to-one correspondence relationship between the multiple numbers and the identification information in the Service Control Point (SCP) for resolving the called number and performing corresponding modification to the calling number. The process flow of the present method is as shown in Figure 1.

Before the flow process of initiating a service request, the system first assigns identification information uniquely corresponding to each of the multiple numbers corresponding to a terminal, respectively, and stores the one-to-one correspondence relationship between the multiple numbers and the identification information into the SCP. For the convenience of description, the online number that the calling subscriber currently uses is set as the Master number (M), and the other offline numbers of the multiple numbers are set as the Slave numbers (Sₙ, n = 1, 2...n).

Referring to Figure 1, the implementation of the present invention will be described as follows by taking voice call service, short message service, value-added short message service, multimedia message service and intra-net connection short message service as examples, respectively. The method of the present invention includes, but not limited to, the following examples.

### Embodiment 1

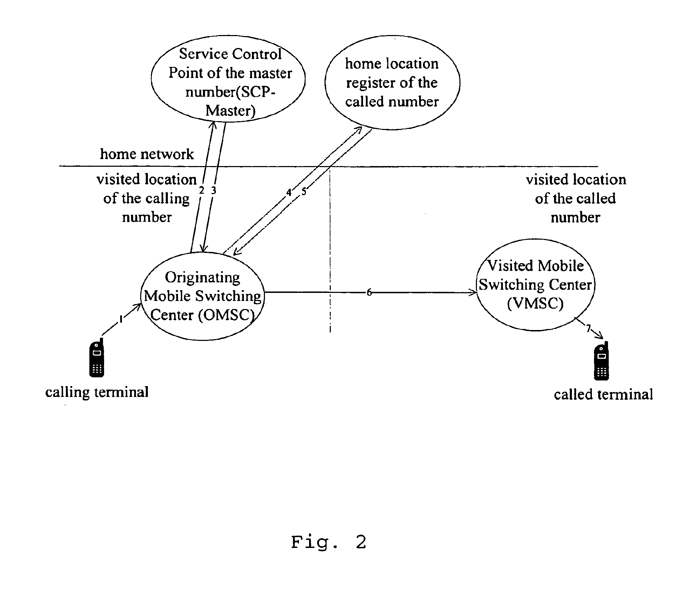

A slave number is used as a calling number A to initiate voice call service to the opposite side. The signaling flow of the present example is shown in Figure 2, and includes the following steps as seen from Figure 2.
At 1, a subscriber M of the multi-numbers per sim card service intends to call a subscriber A by using the identity of the slave number S. When the subscriber is dialing, the identification information corresponding to the slave number S is added in front of the called number A, and/or in other positions of the called number A.

At 2, the Originating Mobile Services Switching Center (OMSC) triggers the intelligent service on the Service Control Point to which the Master number homes (SCP-Master) according to the Originating CAMEL Subscription Information (O-CSI).

At 3, after the SCP-Master has received the calling request, the intelligent service on the SCP-Master retrieves, from the one-to-one correspondence relationship between the multiple numbers and the identification information stored in the SCP-Master, the slave number S corresponding to the identification information carried in the called number A, and hereby determines that the present call is initiated by using the identity of the slave number S. In the dispatched call connection instruction, the calling number is changed from the master number M to the slave number S, and meanwhile the identification information in the called number is removed.

At 4, after having received the call connection instruction dispatched by the SCP-Master, the OMSC sends the Sending Routing Information (SRI) to the Home Location Register (HLR) to which the called subscriber A homes to query the roaming number of the called A.

At 5, after the query, the HLR to which the called subscriber A homes returns the roaming number of the called subscriber A to OMSC.

At 6, the OMSC performs connection to the Visited Mobile Service Switching Center (VMSC) according to the acquired roaming number of the called subscriber A.

At 7, after the connection is established the slave number S will be displayed as the calling number on the terminal of the called subscriber.

### Embodiment 2

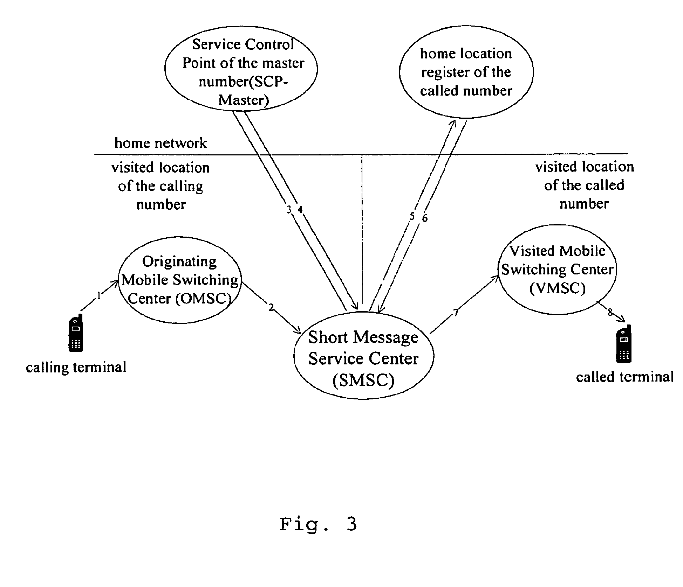

A slave number is used as a calling number to send a short message to the opposite side. The signaling flow of the present embodiment is as shown in Figure 3, and includes the following steps as can be seen in Figure 2.

At 1, a subscriber M of the multi-numbers per sim card service intends to send a short message to a subscriber A by using the identity of the slave number S. When the subscriber is sending the short message, the identification information corresponding to slave number S is added in front of the destination number A, and/or in other positions of the destination number A.

At 2, the Originating Mobile Services Switching Center (OMSC) sends the short message request of the subscriber M to the Short Message Service Center (SMSC) for processing.

At 3, the SMSC finds that the called subscriber M is an intelligent subscriber, and then it triggers the intelligent service on the SCP-Master.

At 4, the intelligent service on the SCP-Master finds that the destination number A carries the identification information after the intelligent service analyzes the sent request. The intelligent service on the SCP-Master retrieves, from the one-to-one correspondence relationship between the multiple numbers and the identification information stored in the SCP-Master, the slave number S corresponding to the carried identification information, and hereby determines that the present service request is initiated by using the identity of the slave number S. In the dispatched connection instruction, the calling number in the signaling parameters is changed from the master number M to the slave number S, and the identification information in the called number A is removed.

At 5, the SMSC sends the Sending Routing Information-Short Message (SRI-SM) to the HLR to which the called number A homes, so as to acquire the current routing information of the called number A.

At 6, the HLR to which the called number A homes feeds back the current routing information of the called number A to the SMSC after a query.

At 7, after having received the routing information, the SMSC sends, according to the routing information, the short message to the VMSC of the currently visited location of the called number A for processing.

At 8, the VMSC sends the short message to the called subscriber A after the VMSC has processed the short message. The slave number S will be displayed as the calling number on the terminal of the called subscriber A.

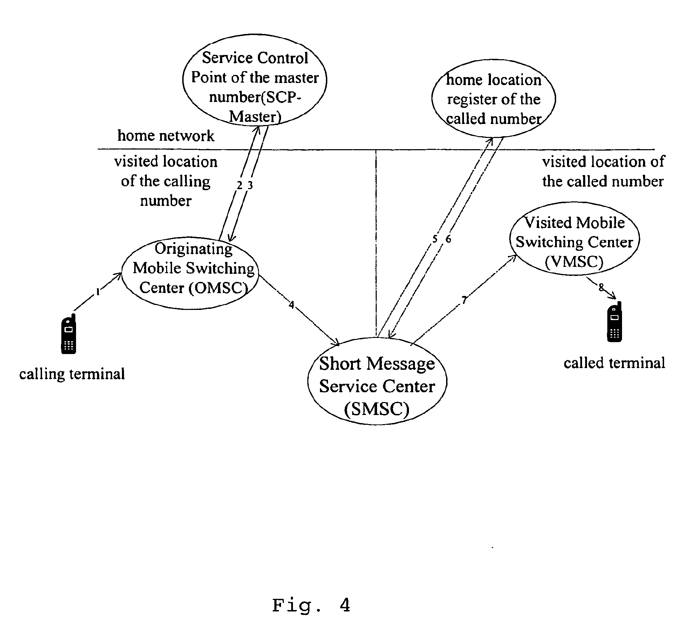

Another process can be used to implement the present embodiment. The signaling flow of the process includes the following steps as can be seen in Figure 4.

At 1, a subscriber M of the multi-numbers per sim card service intends to send a short message to a subscriber A by using the identity of the slave number S. When the subscriber is sending the short message, the identification information corresponding to slave number S is added in front of the destination number A, and/or in other positions of the destination number A.

At 2, the Originating Mobile Services Switching Center (OMSC) triggers the intelligent service on the SCP-Master according to a Mobile Originating-Short Message Service-CAMEL Subscription Information (MO-SMS-CSI) stored in the Visited Location Register (VLR).

At 3, the intelligent service on the SCP-Master analyzes the sent request and finds that the destination number A carries the identification information. The intelligent service on the SCP-Master retrieves, from the one-to-one correspondence relationship between the multiple numbers and the identification information stored in the SCP-Master, the slave number S corresponding to the carried identification information, and hereby determines that the present service request is initiated by using the identity of the slave number S. In the dispatched connection instruction, the calling number in the signaling parameters is changed from the master number M to the slave number S, and the identification information in the called number A is removed.

At 4, the OMSC submits the short message to the SMSC for sending after the OMSC has received the short message connection instruction dispatched by the SCP-Master.

At 5, the SMSC sends a Sending Routing Information-Short Message (SRI-SM) to the HLR to which the called number A homes, so as to acquire the current routing information of the called number A.
At 6, the HLR to which the called number A homes feeds back the current routing information of the called number A to the SMSC after a query.

At 7, after having received the routing information, the VMSC sends, according to the routing information, the short message to the VMSC of the currently visited location of the called number A for processing.

At 8, after having processed the short message, the VMSC sends the short message to the called subscriber A. The slave number S will be displayed as the calling number on the terminal of the called subscriber A.

### Embodiment 3

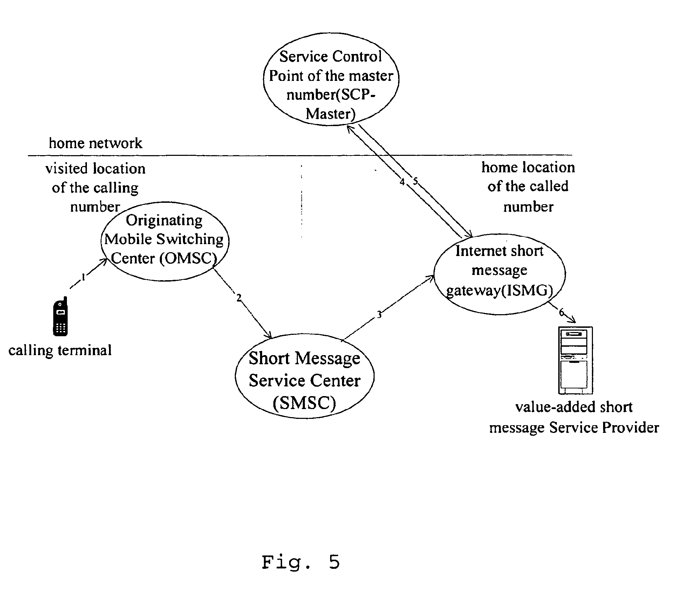

A slave number is used as a calling number to send a value-added short message to the opposite side. The signaling flow of the present embodiment is as shown in Figure 5, and includes the following steps as can be seen from Figure 5.

At 1, a subscriber M of the multi-numbers per sim card service intends to send a value-added short message to the value-added short message Service Provider (SP) by using the identity of the slave number S. When the subscriber M is sending the value-added short message, the identification information corresponding to the slave number S is added in front of the destination number, and/or in other positions of the destination number.

At 2, the Originating Mobile Services Switching Center (OMSC) sends the value-added short message request of the subscriber to the SMSC for processing.

At 3, the SMSC analyzes the destination number in the value-added short message request and finds it is a value-added short message request, and then the SMSC submits the value-added short message request to the Internet Short Message Gateway (ISMG) for processing.

At 4, the ISMG performs analysis and finds that the calling subscriber M is an intelligent subscriber, and then the ISMG triggers the intelligent service on the SCP-Master.

At 5, the intelligent service on the SCP-Master finds that the destination number SP carries the identification information, retrieves, from the one-to-one correspondence relationship between the multiple numbers and the identification information stored in the SCP-Master, the slave number S corresponding to the identification information, and hereby determines that the present service request is initiated by using the identity of the slave number S. In the dispatched connection instruction, the calling number in the signaling parameters is changed from the master number M to the slave number S, and the identification information in the called number SP is removed.

At 6, the ISMG performs routing process for the value-added short message according to the connection instruction dispatched by the SCP-Master, and then sends the value-added short message to the assigned SP. The SP receives the value-added short message with the salve number S being displayed as the calling number in the short message.

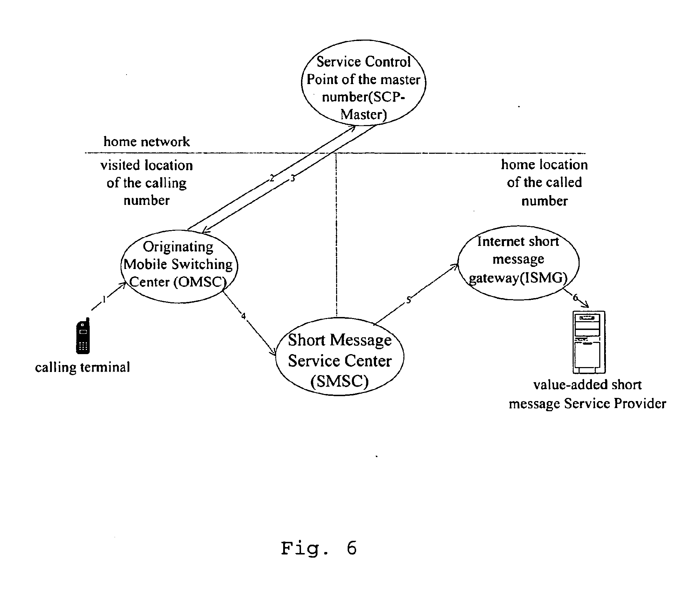

Another process can be used to implement the present embodiment. The signaling flow is as shown in Figure 6, and includes the following steps as can be seen from Figure 6.

At 1, a subscriber M of the multi-number numbers per card service intends to send a value-added short message to the value-added short message service SP by using the identity of the slave number S. When the subscriber M is sending the value-added short message, the identification information corresponding to slave number S is added in front of the destination number SP, and/or in other positions of the destination number SP.

At 2, the OMSC triggers the intelligent service on the SCP-Master according to the MO-SMS-CSI stored in the VLR.

At 3, the intelligent service on the SCP-Master finds that the destination number SP carries identification information, retrieves, from the one-to-one correspondence relationship between the multiple numbers and the identification information stored in the SCP-Master, the slave number S corresponding to the identification information, and hereby determines that the present service request is initiated by using the identification of slave number S. In the dispatched connection instruction, the calling number in the signaling parameters is changed from the master number M to the slave number S, and the identification information in the called number SP is removed.

At 4, the OMSC submits the value-added short message to the SMSC for sending process after the OMSC has received the connection instruction dispatched by the SCP-Master.

At 5, the SMSC finds, from the destination number SP, that this is a value-added short message, and directly submits the value-added short message to the ISMG for routing and sending processes.

At 6, the ISMG routes and sends the value-added short message to the assigned SP. The SP receives the value-added short message with the salve number S being displayed as the calling number in the short message.

### Embodiment 4

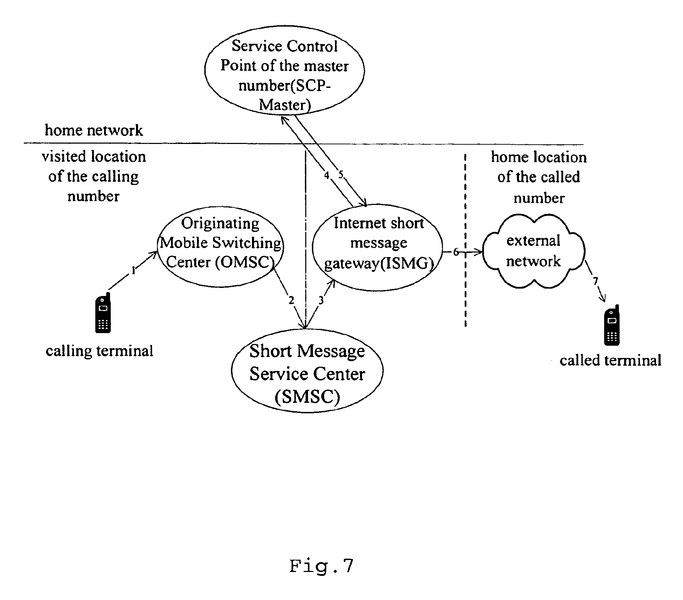

A slave number is used as a calling number to send an intranet connection short message to the opposite side. The signaling flow of the present embodiment is as shown in Figure 7, and includes the following steps as can be seen from Figure 7.

At 1, a subscriber M of the multi-numbers per sim card service intends to send an intra-net connection short message to another network subscriber A by using the identity of the slave number S. When the subscriber M is sending the intranet connection short message, the identification information corresponding to slave number S is added in front of the destination number A, and/or in other positions of the destination number A.

At 2, the Originating Mobile Services Switching Center (OMSC) sends the intra-net connection short message request of the subscriber to the SMSC for processing.

At 3, the SMSC analyzes the destination number A and finds it is an intra-net connection short message request, and then the SMSC submits the short message request to the ISMG for processing.

At 4, the ISMG performs analysis and finds that the called subscriber M is an intelligent subscriber, and then the ISMG triggers the intelligent service on the SCP-Master.

At 5, the intelligent service on the SCP-Master finds that the destination number A carries the identification information, retrieves, from the one-to-one correspondence relationship between the multiple numbers and the identification information stored in the SCP-Master, the slave number S corresponding to the identification information, and hereby determines that the present service request is initiated by using the identity of the slave number S. In the dispatched connection instruction, the calling number in the signaling parameters is changed from the master number M to the slave number S, and the identification information in the called number A is removed.

At 6, the ISMG performs routing process on the intra-net connection short message according to the connection instruction dispatched by the SCP-Master, and sends the intra-net connection short message to an Interconnect Gateway of an external network. Finally, the short message is sent to the terminal of the called subscriber A with the slave number S being displayed as the calling number.

### Embodiment 5

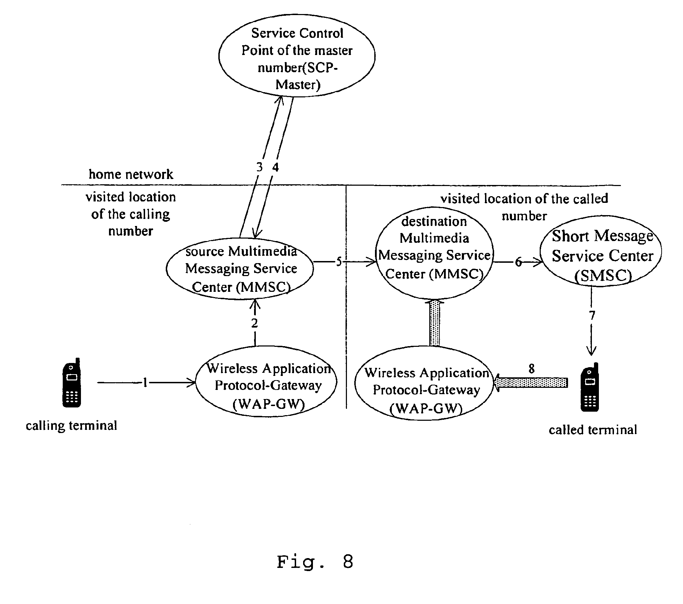

A slave number is used as a calling number to send a multimedia message to the opposite side. The signaling flow of the present embodiment is as shown in Figure 8, and includes the following steps as can be seen from Figure 8.

At 1, a subscriber of the multi-numbers per sim card service M intends to send a multimedia message to a subscriber A by using the identity of the slave number S. When the subscriber M is sending the multimedia message, the identification information corresponding to the slave number S is added in front of the destination number A, and/or in other positions of the destination number A.

At 2, the Wireless Application Protocol-Gateway (WAP-GW) sends the multimedia message request sent by the subscriber to the source Multimedia Messaging Service Center (MMSC) for processing.

At 3, the source MMSC performs analysis and finds that the calling subscriber M is an intelligent subscriber, and then triggers the intelligent service on the SCP-Master.

At 4, the intelligent service on the SCP-Master finds that the destination number carries the identification information, retrieves, from the one-to-one correspondence relationship between the multiple numbers and the identification information stored in the SCP-Master, the slave number S corresponding to the identification information, and hereby determines that the present service request is initiated by using the identification of the slave number S. In the dispatched connection instruction, the calling number in the signaling parameters is changed from the master number M to the slave number S, and the identification information in the called number A is removed.

At 5, the source MMSC sends, according to the connection instruction dispatched by the SCP-Master, the multimedia message to the destination MMSC for processing.

At 6, the destination MMSC instructs the SMSC to send a notification message to the called subscriber A after the destination MMSC has received the multimedia message.

At 7, the SMSC sends the notification message to the called subscriber A, so as to inform the subscriber A that there is a multimedia message to be received.

At 8, the called subscriber A downloads the multimedia message from the destination MMSC through the WAP-GW. The slave number S is displayed as the calling number on the terminal of the subscriber A after the completion of the download.

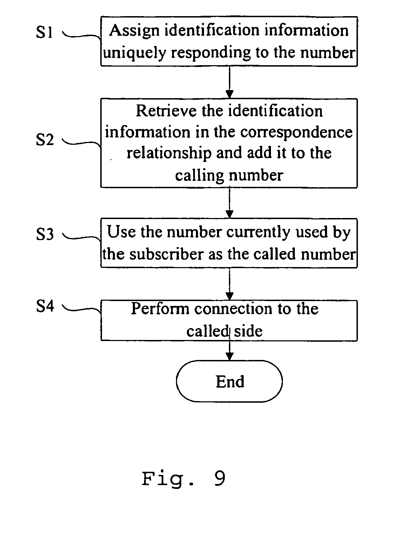

In order to enable the subscriber to be informed of non-voice communications relating to the offline number(s) and to identify a incoming call is initiated to which one of the multiple numbers corresponding to the present terminal when the call comes, the present invention includes setting identification information uniquely corresponding to each one of the multiple numbers which are bound to the terminal respectively, storing the one-to-one correspondence relationship between the multiple numbers and the identification information in the Service Control Point (SCP). When the SCP receives a service request, it resolves the called number according to the correspondence relationship and carries the identification information corresponding to the called number in the calling number; thereafter, the number currently used by the subscriber is used as the called number to perform the connection to the called side. The process flow of the present method is shown in Figure 9.

Before the process flow of responding to a service request, the system first assigns identification information uniquely corresponding to each one of the multiple numbers that a terminal corresponds to, respectively, and stores the one-to-one correspondence relationship between the multiple numbers and the identification information in the SCP. For the convenience of description, the online number used currently by the called subscriber is set as the Master number (M), and the other offline numbers of the multiple numbers are set as the Slave numbers (Sₙ, n = 1, 2...n).

Referring to Figure 9, the implementation of the present method is described as follows with voice call service, short message service, value-added short message service, multimedia message service and intra-net connection short message service as examples respectively. The method of the present invention includes, but not limited to, the following embodiments.

### Embodiment 1-1

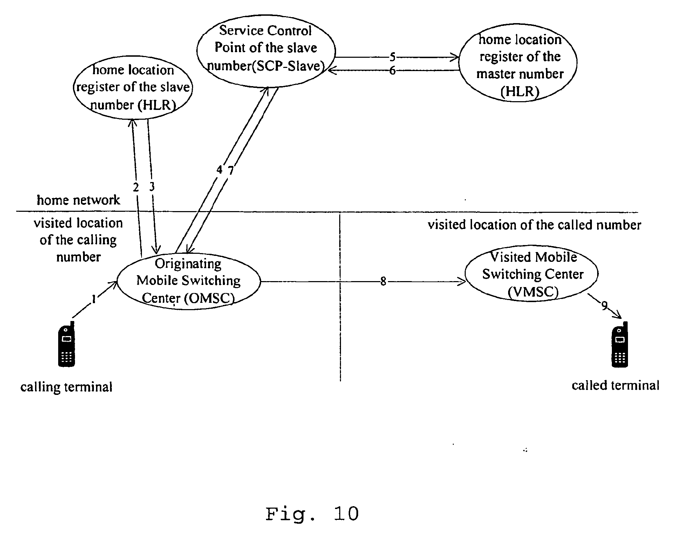

A slave number is used as a called number to respond to voice call service initiated by the opposite side. The signaling flow of the present embodiment is as shown in Figure 10, and includes the following steps as can be seen from Figure 10.

At 1, the calling subscriber A initiates a call to the slave number S of a subscriber of the multi-numbers per sim card service, i.e. the called number that is dialed is the slave number S.

At 2, the Originating Mobile Services Switching Center (OMSC) sends a Sending Routing Information (SRI) to the Home Location Register of the slave number S (HLR-Slave) to acquire the roaming number of the slave number S.

At 3, HLR-Slave performs corresponding processes and feeds back a Terminating -CAMEL Subscription Information (T-CSI) to the OMSC.

At 4, the OMSC triggers the intelligent service on the Service Control Point to which the slave number S homes (SCP-Slave) according to the T-SCI.

At 5, the intelligent service on the SCP-Slave retrieves, according to the one-to-one correspondence relationship between the multiple numbers and the identification information stored in the SCP-Slave, the identification information corresponding to the slave number S, and determines that the current online number of the multiple numbers bound to the called terminal is the master number M. Thereafter the SCP-Slave sends the SRI to the Home Location Register of the master number M (HLR-Master) to acquire the roaming number of the master number M.

At 6, the HLR-Master performs corresponding processes and feeds back the current roaming number of the master number M to the SCP-Slave.

At 7, the called number is changed from the slave number S to the current roaming number of the master number M in the call connection instruction which is dispatched to OMSC by the SCP-Slave, and the retrieved identification information is added in the calling number to indicate that the present calling is initiated to the slave number S.

At 8, after having received the call connection instruction sent from the SCP-Slave, the OMSC performs connection to the Visited Mobile Switching center (VMSC) of the currently visited location of the master number M according to the roaming number of the master number M in the message.

At 9, the calling number added with the identification information corresponding to the slave number S is displayed on the terminal of the called subscriber M after the connection has been completed.

Another process can be used to implement the present embodiment.

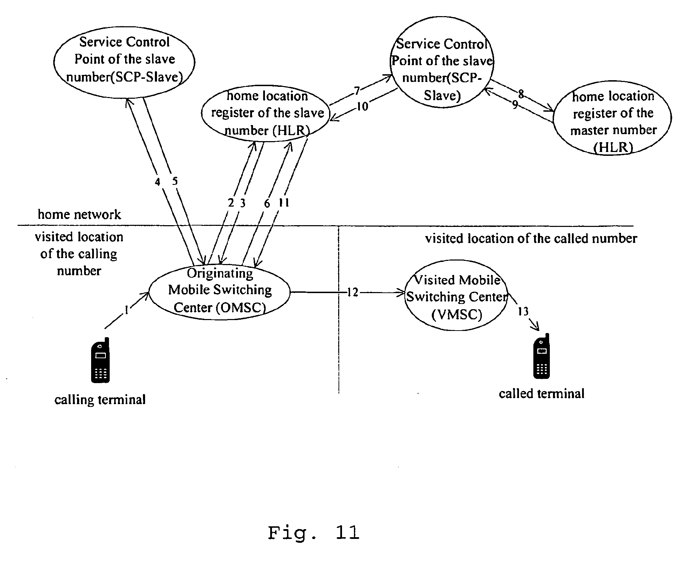

The slave number S itself never really roams and updates its location, and the address of the Visited MSC (i.e. the VMSC) of the slave number S is set initially as the address of the SCP to which the master number M homes (i.e. the SCP-Master) in the HLR of the slave number S (HLR-Slave), and therefore the initially set content in the HLR-Slave keeps unchanged. Based on the above precondition, the signaling flow chart of the process includes the following steps, as can be seen from Figure 11.

At 1, the calling subscriber A initiates a call to the slave number S of a subscriber of the multi-numbers per sim card service, i.e. the called number that is dialed is the slave number S.

At 2, the Originating Mobile Services Switching Center (OMSC) sends the Sending Routing Information (SRI) to the HLR-Slave to acquire the roaming number of the slave number S.

At 3, the HLR-Slave performs corresponding processes and feeds back the T-CSI to the OMSC.

At 4, the OMSC triggers the intelligent service on the SCP-Slave according to the T-SCI.

At 5, the intelligent service on the SCP-Slave retrieves, according to the one-to-one correspondence relationship between the multiple numbers and the identification information stored in the SCP-Slave, the identification information corresponding to the slave number S, and determines that the current online number of the multiple numbers bound to the called terminal is the master number M. In the connection instruction that is dispatched by the SCP-Slave to the OMSC, the called number (the slave number S) keeps unchanged, and the calling number is added with the retrieved identification information to indicate that the present call is initiated to the slave number S.

At 6, the OMSC processes the call according to the call connection instruction dispatched by the SCP-Slave, and sends the SRI request to the HLR-Slave to acquire the current roaming number of the slave number.

At 7, the HLR-Slave sends, according to the registered address information of the Visited Mobile Switching Center (VMSC), a Providing Roaming Number message (PRN) to the Service Control Point to which the master number homes (SCP-Master) to acquire information about the currently visited location of the slave number S.

At 8, before responding to the PRN message sent by the HLR-Slave in the last step, the SCP-Master first sends the SRI to the HLR-Master to acquire the current roaming number of the master number M.

At 9, the HLR-Master feeds back the current roaming number of the master number M to the SCP-Master.

At 10, the SCP-Master feeds back the acquired current roaming number of the master number M to the HLR-Slave as the current roaming information of the slave number S.

At 11, in response to the above 6, the HLR-Slave feeds back the acquired current roaming information of the slave number S (i.e. the current roaming number of the master number M) to the OMSC.

At 12, after having received the routing information, the OMSC performs connection to the current Visited Mobile Switching Center of the master number M according to the roaming number of the master number M in the information.

At 13, the calling number added with the identification information corresponding to the slave number S is displayed on the terminal of the called subscriber M after the connection has succeeded.

### Embodiment 2-1

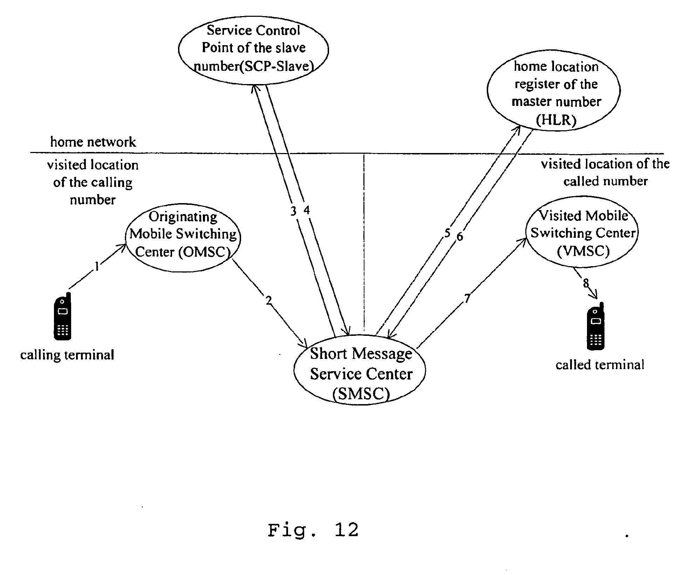

A slave number is used as the called number to receive a short message sent from the opposite side. The signaling flow of the present embodiment is as shown in Figure 12, and includes the following steps as can be seen from Figure 12.

At 1, the calling subscriber A sends a short message to the slave number S of a subscriber of the multi-numbers per sim card service, i.e. the destination number is the slave number S.

At 2, the Originating Mobile Services Switching Center (OMSC) submits the short message to the Short Message Service Center (SMSC) for short message sending process.

At 3, the SMSC performs analysis and finds that the called number S is an intelligent subscriber, and then the SMSC triggers the intelligent service on the SCP-Slave for processing.

At 4, the intelligent service on the SCP-Slave retrieves, from the one-to-one correspondence relationship between the multiple numbers and the identification information stored in the SCP-Slave, the identification information corresponding to the destination number (the slave number S), and determines that the current online number of the multiple numbers which are bound to the called terminal is the master number M. In the connection instruction which is dispatched to the OMSC by the SCP-Slave, the called number is changed from the slave number S to the master number M, and the retrieved identification information is added in the calling number in order to indicate that the present calling is initiated to the slave number S.

At 5, the SMSC sends, according to the connection instruction dispatched by the SCP-Slave, a Sending Routing Information for Short Message (SRI-SM) to the HLR-Master to acquire the current routing information of the called master number M.

At 6, HLR-Master performs processing and feeds back the routing information of the master number M to the SMSC.

At 7, after having received the routing information, the SMSC sends, according to the routing information, the short message to the VMSC of the currently visited location of the master number M for processing.

At 8, the VMSC sends the short message to the called subscriber M after the processing. The calling number added with the identification information corresponding to the slave number S is displayed on the terminal of the called subscriber M.

Another process can be used to implement the present embodiment.

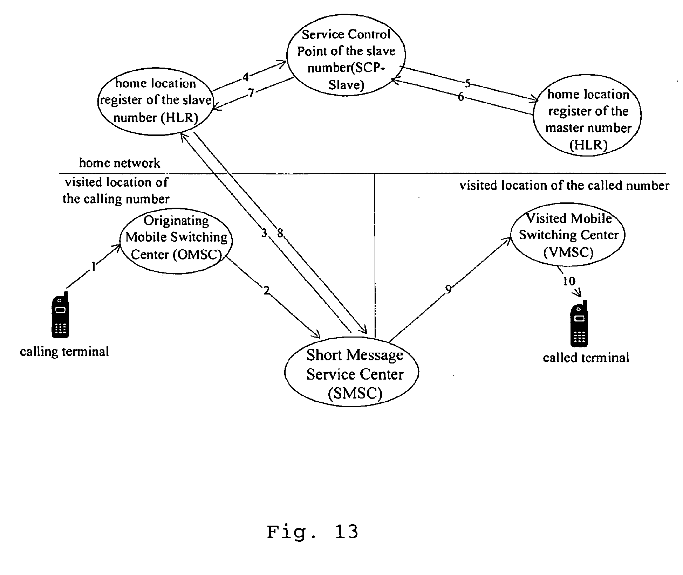

The slave number S itself never really roams or updates its location, and the address of the Visited MSC (i.e. VMSC) of the slave number S is initially set as the address of the SCP to which the master number M homes (i.e. the SCP-Master) in the HLR of the slave number S (HLR-Slave), and therefore the initially set content in the HLR-Slave keeps unchanged. Based on the above precondition, the signaling flow chart of the process includes the following steps, as can be seen from Figure 13.

At 1, the calling subscriber A sends a short message to the slave number S of a subscriber of the multi-numbers per sim card service, i.e. the destination number is the slave number S.

At 2, the OMSC submits the short message to the SMSC for sending process.

At 3, the SMSC sends a Sending Routing Information-Short Message (SRI-SM) to the HLR-Slave to acquire the current routing information of the called number S.

At 4, the HLR-Slave sends, according to the registered address information of the VMSC, a Providing Roaming Number message (PRN) to the SCP-Master to obtain information about the currently visited location of the slave number S. The intelligent service on the SCP-Master is triggered simultaneously. The intelligent service on the SCP-Slave retrieves, according to the one-to-one correspondence relationship between the multiple numbers and the identification information stored in the SCP-Slave, the identification information corresponding to the called number (the slave number S), and determines that the current online number of the multiple numbers which are bound to the called terminal is the master number M. In the connection instruction dispatched by the SCP-Slave, the called number (the slave number S) keeps unchanged, and the calling number is added with the retrieved identification information to indicate that the present service is initiated to the slave number S.

At 5, before responding to the PRN message sent by the HLR-Slave in the last step, the SCP-Master sends a SRI to the HLR-Master to acquire the current roaming number of the master number M.

At 6, the HLR-Master performs processing and feeds back the current roaming number of the master number M to the SCP-Master.

At 7, in response to the above 4, the SCP-Master feeds back the acquired current roaming number of the master number M to the HLR-Slave as the current roaming information of the slave number S.

At 8, in response to the above 3, the HLR-Slave feeds back the acquired current roaming information of the slave number S, i.e. the current roaming number of the master number M, to the SMSC.

At 9, after having received the routing information, the OMSC sends, according to the routing information, i.e. the current roaming number of the master number M, the short message to the VMSC of the currently Visited Location of the master number M for processing.

At 10, the VMSC of the currently Visited Location of the master number M sends the short message to the subscriber M, and the calling number added with the identification information corresponding to the slave number S will be displayed on the terminal of the called subscriber M.

### Embodiment 3-1

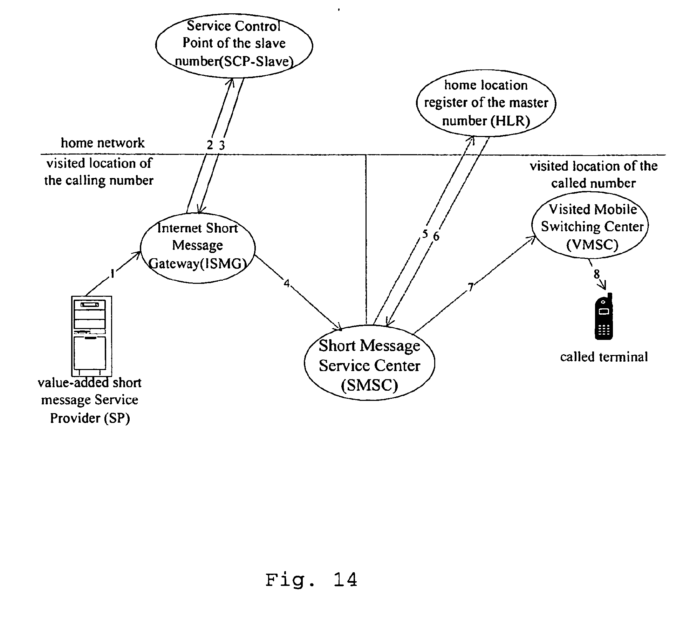

A slave number is used as a called number to receive a value-added short message sent from the opposite side. The signaling flow of the present embodiment includes the following steps, as can be seen in Figure 14.

At 1, the value-added short message Service Provider (SP) sends a value-added short message to the slave number S of a subscriber of the multi-numbers per sim card service, i.e. the destination number is the slave number S.
At 2, the ISMG performs analysis and finds that the called number S is an intelligent subscriber, and then the ISMG triggers the intelligent service on the SCP-Slave for processing.

At 3, the intelligent service on the SCP-Slave retrieves, from the one-to-one correspondence relationship between the multiple numbers and the identification information stored in the SCP-Slave, the identification information corresponding to the slave number S, and determines that the current online number of the multiple numbers which are bound to the called terminal is the master number M. In the connection instruction that is dispatched by the SCP-Slave to the ISMG, the called number is changed from the slave number S to the master number M, and the calling number is added with the retrieved identification information to indicate that the present service request is initiated to the slave number S.

At 4, the ISMG sends, according to the connection instruction dispatched by the SCP-Slave, the value-added short message to the SMSC for processing.

At 5, after having received the value-added short message, the SMSC receives the current called number M, and sends a Sending Routing Information-Short Message (SRI-SM) to the HLR-M to obtain the current routing information of the master number M.

At 6, the HLR-M performs processing and feeds back the routing information to the SMSC.

At 7, after having received the routing information, the SMSC sends, according to the routing information, the value-added short message to the VMSC of the currently visited location of the master number M for processing.

At 8, the VMSC sends the value-added short message to the called subscriber M, and the calling number added with the identification information corresponding to the slave number S will be displayed on the terminal of the called subscriber M.

### Embodiment 4-1

A slave number is used as a called number to receive an intra-net connection short message from the opposite side.

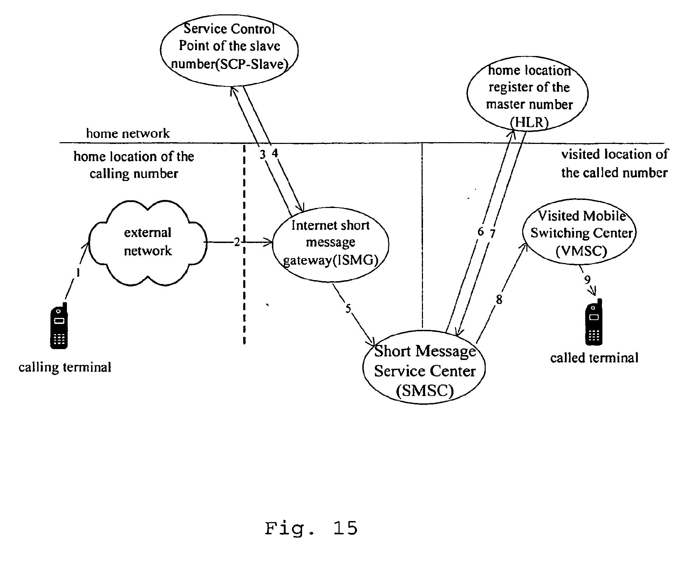

The signaling flow of the present embodiment includes the following steps, as can be seen in Figure 15.

At 1, a subscriber A of an external network sends an intranet connection short message to the slave number S of a subscriber of the multi-numbers per sim card service, i.e. the destination number is the slave number S.

At 2, the intra-net connection short message request is sent to the Internet Short Message Gateway (ISMG) for processing. The ISMG performs analysis and finds that the called number S is an intelligent subscriber, and then the ISMG triggers the intelligent service on the SCP-Slave for processing.

At 3, the intelligent service on the SCP-Slave retrieves, from the one-to-one correspondence relationship between the multiple numbers and the identification information stored in the SCP-Slave, the identification information corresponding to the slave number S, and determines that the current online number of the multiple numbers which are bound to the called terminal is the master number M. In the connection instruction that is dispatched by SCP-Slave to ISMG, the called number is changed from the slave number S to the master number M, and the calling number is added with the retrieved identification information to indicate that the present call is directed to the slave number S.

At 4, the ISMG sends, according to the connection instruction dispatched by the SCP-Slave, the intra-net connection short message to the SMSC for processing.

At 5, after having received the intra-net connection short message, the SMSC obtains the current called number M from the intra-net connection short message, and sends a Sending Routing Information-Short Message(SRI-SM)to the HLR-M to obtain the current routing information of the master number M.

At 6, the HLR-M performs processing and feeds back the routing information to the SMSC.

At 7, after having received the routing information, the SMSC sends, according to the routing information, the intra-net connection short message to the VMSC of the currently visited location of the master number M for processing.

At 8, the VMSC sends the intra-net connection short message to the called subscriber M, and the calling number added with the identification information corresponding to the slave number S will be displayed on the terminal of the called subscriber M.

### Embodiment 5-1

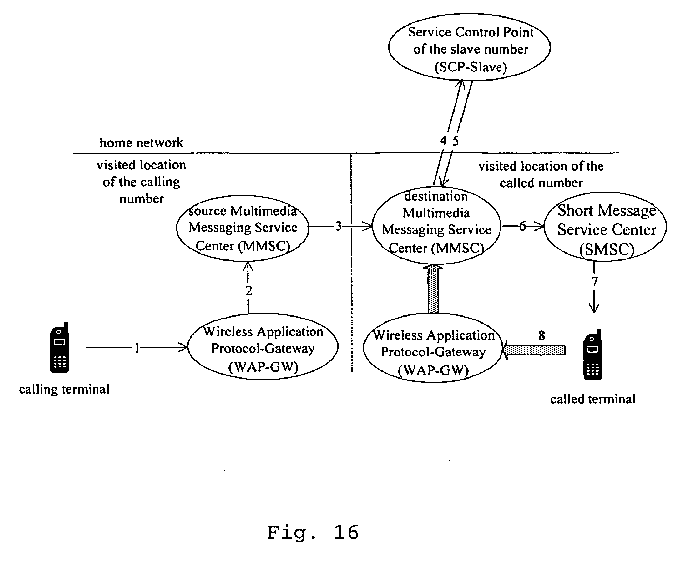

A slave number is used as a called number to receive a Multimedia Message Service sent from the opposite side. The signaling flow of the present embodiment includes the following steps, as shown in Figure 16.

At 1, a subscriber A sends the Multimedia Message Service (MMS) to the slave number S of a subscriber of the multi-numbers per sim card service, i.e. the destination number is the slave number S.

At 2, the MMS request message is sent to the source Multimedia Messaging Service Center (MMSC) for processing through a Wireless Application Protocol-Gateway (WAP-GW).

At 3, the source MMSC sends the MMS short message to the destination MMSC according to the called number S.

At 4, the destination MMSC performs analysis and finds that the called number S is an intelligent subscriber, and then the destination MMSC triggers the intelligent service on the SCP-Slave for processing.

At 5, the intelligent service on the SCP-Slave retrieves, from the one-to-one correspondence relationship between the multiple numbers and the identification information stored in the SCP-Slave, the identification information corresponding to the destination number (the slave number S), and determines that the current online number of the multiple numbers which are bound to the called terminal is the master number M. In the connection instruction that is dispatched by the SCP-Slave to the destination MMSC, the called number is changed from the slave number S to the master number M, and the calling number is added with the retrieved identification information to indicate that the present call is initiated to the slave number S.

At 6, after having received the connection instruction dispatched by the SCP-Slave, the destination MMSC instructs the SMSC to send a notification short message to the called subscriber M.
At 7, after having received the notification short message, the SMSC forwards the notification short message to the called subscriber M to notify the subscriber that there is an MMS short message to be received.

At 8, the called subscriber M downloads the MMS short message from the destination MMSC through the Wireless Application Protocol-Gateway (WAP-GW). The calling number added with the identification information corresponding to the slave number S will be displayed on the terminal of the called subscriber M.

It can be seen from the above detailed embodiments that all the communication activities relating to the slave numbers (currently offline numbers) are re-routed to the terminal of the master number (currently online number). The subscriber can directly use any one of the multiple numbers bound to the present terminal to perform answering and dialing operations by means of the terminal of the master number.

Obviously, those skilled in the art can make any modification and transformation to the present invention within the scope of the present invention. Therefore, if these modifications and transformations are within the scope of the claims of the present invention and its equivalent techniques, the present invention is intended to include these modifications and transformations.

## Claims

1. A method for achieving multi-numbers per sim card service, comprising:
assigning (S1), for each of the multiple numbers of a terminal, identification information uniquely corresponding to the each of the multiple numbers to form a one-to-one correspondence relationship between the each of the multiple numbers and the identification information;
wherein the correspondence relationship is stored in a Service Control Point, and the identification information corresponding to a number that a calling subscriber intends to use is carried (S2) in information of a service request when the terminal initiates the service request;
obtaining (S3), by the Service Control Point, the identification information according to the received service request, and retrieving (S3), by the Service Control Point, a corresponding number with the identification information; and
performing (S4, S5) connection to a called side by using the retrieved number as a calling number.

2. The method claimed in claim 1, wherein the identification information carried in the called number is first removed before the connection to the called side is performed.

3. The method claimed in claim 2, wherein the calling number is changed from the number that initiates the service request to the corresponding number before the connection to the called side is performed.

4. The method claimed in claim 3, wherein the service request initiated by the terminal comprises any one as selected from the group comprising a request for a voice call, a request for sending a short message, a request for sending a value-added short message , a request for sending a multimedia message, and a request for sending an intra-net connection short message.

5. A method for implementing multi-numbers per sim card service, comprising: assigning (S1), for each of the multiple numbers of a called terminal, identification information uniquely corresponding to the each of the multiple numbers to form a one-to-one correspondence relationship between the each of the multiple numbers and the identification information, wherein the correspondence relationship is stored in a Service Control Point;
retrieving (S2), by the Service Control Point, a number currently activated by the called terminal according to a called number and the correspondence relationship after receiving a service request;
performing (S3, S4), by the Service Control Point, connection to a called side by using the currently activated number as the called number.

6. The method claimed in claim 5, wherein corresponding identification information is retrieved according to the called number and the corresponding identification information is added to a calling number, so as to display the calling number added with the identification information on the called terminal after establishment of the connection, thereby indicating the original called number corresponding to the present service request.

7. The method claimed in claim 6, wherein the called number is changed from the number to which the calling side directs when initiating the service request to the number currently used by the called side, before the connection to the called side is performed.

8. The method claimed in claim 7, wherein the service request initiated by the terminal comprises any one as selected from the group comprising a voice call, a short message, a value-added short message, a multimedia message, and an intra-net connection short message.

## Patentansprüche

1. Verfahren zur Realisierung eines Dienstes mit mehreren Nummern pro Sim-Karte, mit den folgenden Schritten:
Zuweisen (S1) von Identifikationsinformationen für jede der mehreren Nummern eines Endgeräts, die eindeutig jeder der mehreren Nummern entsprechen, um eine eindeutige Korrespondenzbeziehung zwischen jeder der mehreren Nummern und den Identifikationsinformationen zu bilden;
wobei die Korrespondenzbeziehung in einem Service-Control-Point gespeichert wird, die einer Nummer, die ein anrufender Teilnehmer verwenden möchte, entsprechenden Identifikationsinformationen in Informationen einer Dienstanforderung geführt (S2) werden, wenn das Endgerät die Dienstanforderung einleitet;
Erhalten (S3) der Identifikationsinformationen durch den Service-Control-Point gemäß der empfangenen Dienstanforderung und Abrufen (S3) einer entsprechenden Nummer mit den Identifikationsinformationen durch den Service-Control-Point; und Durchführen (S4, S5) einer Verbindung zu der angerufenen Seite unten Verwendung der abgerufenen Nummer als eine anrufende Nummer.

2. Verfahren nach Anspruch 1, wobei die in der angerufenen Nummer geführten Identifikationsinformationen zuerst entfernt werden, bevor die Verbindung zu der angerufenen Seite durchgeführt wird.

3. Verfahren nach Anspruch 2, wobei die anrufende Nummer von der Nummer, die die Dienstanforderung einleitet, zu der entsprechenden Nummer gewechselt wird, bevor die Verbindung zu der angerufenen Seite durchgeführt wird.

4. Verfahren nach Anspruch 3, wobei die durch das Endgerät eingeleitete Dienstanforderung eine beliebige aus der folgenden Gruppe ausgewählte umfasst:
eine Anforderung einer Sprachverbindung, eine Anforderung zum Senden einer Kurznachricht, eine Anforderung zum Senden einer Mehrwert-Kurznachricht, eine Anforderung zum Senden einer Multimedia-Nachricht und eine Anforderung zum Senden einer Intranet-Verbindungs-Kurznachricht.

5. Verfahren zum Implementieren eines Dienstes mit mehreren Nummern pro Sim-Karte, mit den folgenden Schritten: Zuweisen (S1) von Identifikationsinformationen, die eindeutig jeder der mehreren Nummern entsprechen, für jede der mehreren Nummern eines angerufenen Endgeräts, um eine eindeutige Korrespondenzbeziehung zwischen jeder der mehreren Nummern und den Identifikationsinformationen zu bilden, wobei die Korrespondenzbeziehung in einem Service-Control-Point gespeichert wird;
Abrufen (S2) einer gerade durch das angerufene Endgerät aktivierten Nummer durch den Service-Control-Point gemäß einer angerufenen Nummer und der Korrespondenzbeziehung nach dem Empfang einer Dienstanforderung;
Durchführen (S3, S4) der Verbindung zu einer angerufenen Seite durch den Service-Control-Point unter Verwendung der gerade aktivierten Nummer als die angerufene Nummer.

6. Verfahren nach Anspruch 5, wobei entsprechende Identifikationsinformationen gemäß der angerufenen Nummer abgerufen werden und die entsprechenden Identifikationsinformationen zu einer angerufenen Nummer hinzugefügt werden, um so die mit den Identifikationsinformationen hinzugefügte anrufende Nummer auf dem angerufenen Endgerät nach der Herstellung der Verbindung anzuzeigen, um dadurch die der derzeitigen Dienstanforderung entsprechenden ursprüngliche angerufene Nummer anzugeben.

7. Verfahren nach Anspruch 6, wobei die angerufene Nummer von der Nummer, zu der die anrufende Seite beim Einleiten der Dienstanforderung weiterschaltet, zu der gerade von der angerufenen Seite verwendeten Nummer gewechselt wird, bevor die Verbindung zu der angerufenen Seite durchgeführt wird.

8. Verfahren nach Anspruch 7, wobei die durch das Endgerät eingeleitete Dienstanforderung eine beliebige aus der folgenden Gruppe ausgewählte umfasst:
eine Sprachverbindung, eine Kurznachricht, eine Mehrwert-Kurznachricht, eine Multimedia-Nachricht und eine Intranet-Verbindungs-Kurznachricht.

## Revendications

1. Procédé pour disposer de plusieurs numéros par service de carte SIM, comprenant les étapes consistant à :
affecter (S1), pour chacun des différents numéros d'un terminal, des informations d'identification correspondant de manière unique à chacun des différents numéros pour former une relation de correspondance biunivoque entre chacun des différents numéros et les informations d'identification ;
où la relation de correspondance est stockée dans un point de commande de service, et les informations d'identification correspondant à un numéro qu'un abonné appelant a l'intention d'utiliser sont acheminées (S2) dans les informations d'une demande de service lorsque le terminal initie la demande de service ;
obtenir (S3), par le point de commande de service, les informations d'identification en fonction de la demande de service reçue, et récupérer (S3), par le point de commande de service, un numéro correspondant aux informations d'identification ; et
établir (S4, S5) une connexion avec l'appelé en utilisant le numéro récupéré comme numéro appelant.

2. Procédé tel que revendiqué dans la revendication 1, dans lequel les informations d'identification acheminées dans le numéro appelé sont tout d'abord supprimées avant que la connexion avec l'appelé soit établie.

3. Procédé tel que revendiqué dans la revendication 2, dans lequel le numéro appelant est changé du numéro qui initie la demande de service au numéro correspondant avant que la connexion avec l'appelé soit établie.

4. Procédé tel que revendiqué dans la revendication 3, dans lequel la demande de service initiée par le terminal comprend toute demande sélectionnée dans le groupe constitué des demandes suivantes : une demande d'appel vocal, une demande d'envoi de message SMS, une demande d'envoi de message court à valeur ajoutée, une demande d'envoi de message multimédia et une demande d'envoi de message court de connexion intranet.

5. Procédé pour implémenter plusieurs numéros par service de carte SIM comprenant les étapes consistant à :
affecter (S1), pour chacun des différents numéros d'un terminal appelé, des informations d'identification correspondant de manière unique à chacun des différents numéros pour former une relation de correspondance biunivoque entre chacun des différents numéros et les informations d'identification, où la relation de correspondance est stockée dans un point de commande de service ;
récupérer (S2), par le point de commande de service, un numéro actuellement activé par le terminal appelé en fonction d'un numéro appelé et la relation de correspondance après réception d'une demande de service ;
établir (S4, S5), par le point de commande de service, une connexion avec l'appelé en utilisant le numéro actuellement activé comme numéro appelé.

6. Procédé tel que revendiqué dans la revendication 5, dans lequel les informations d'identification correspondantes sont récupérées en fonction du numéro appelé et les informations d'identification correspondantes sont ajoutées à un numéro appelant, de manière à afficher le numéro appelant avec les informations d'identification sur le terminal appelé après l'établissement de la connexion, indiquant par ce moyen le numéro appelé d'origine correspondant à la présente demande de service.

7. Procédé tel que revendiqué dans la revendication 6, dans lequel le numéro appelé est changé du numéro vers lequel pointe l'appelant lorsque la demande de service est initiée au numéro actuellement utilisé par l'appelé, avant que la connexion avec l'appelé soit établie.

8. Procédé tel que revendiqué dans la revendication 7, dans lequel la demande de service initiée par le terminal comprend toute demande sélectionnée dans le groupe constitué des demandes suivantes : un appel vocal, un message SMS, un message court à valeur ajoutée, un message multimédia et un message court de connexion intranet.
